Europäisches Patentamt

**European Patent Office**

**Office européen des brevets**

(11) Veröffentlichungsnummer: **0 193 844 B1**

# EUROPÄISCHE PATENTSCHRIFT

(45) Veröffentlichungstag der Patentschrift: **03.04.91**

(21) Anmeldenummer: **86102430.5**

(22) Anmeldetag: **25.02.86**

(51) Int. Cl.⁵: **C08J 5/18**, B29C 55/12, B29C 71/02, G11B 5/62, //B29K67:00

Die Akte enthält technische Angaben, die nach dem Eingang der Anmeldung eingereicht wurden und die nicht in dieser Patentschrift enthalten sind.

(54) Biaxial orientierte Folie mit hoher Kratz- und Abriebfestigkeit.

(30) Priorität: **05.03.85 DE 3507729**

(43) Veröffentlichungstag der Anmeldung:
**10.09.86 Patentblatt 86/37**

(45) Bekanntmachung des Hinweises auf die
Patenterteilung:
**03.04.91 Patentblatt 91/14**

(84) Benannte Vertragsstaaten:
**DE FR GB IT LU NL**

(56) Entgegenhaltungen:
**DE-A- 3 101 232**
**DE-A- 3 415 835**
**DE-B- 1 629 505**

(73) Patentinhaber: **HOECHST AKTIENGESELL-SCHAFT**
**Postfach 80 03 20**
**W-6230 Frankfurt am Main 80(DE)**

(72) Erfinder: **Hensel, Hartmut, Dr.**
**Am Rotenberg 2**
**W-6229 Schlangenbad 3(DE)**
Erfinder: **Dallmann, Hermann, Dr.**
**Erbsenacker 29**
**W-6200 Wiesbaden(DE)**
Erfinder: **Schäfer, Werner, Dr.**
**Rosenstr. 10**
**W-6328 Hofheim-Diedenbergen(DE)**

EP 0 193 844 B1

## Beschreibung

Die Erfindung bezieht sich auf eine biaxial orientierte und thermofixierte Folie aus thermoplastischem Polyestermaterial mit verbesserter Abriebfestigkeit.

Folien aus thermoplastischen Kunststoffen werden üblicherweise streckorientiert, um ihnen verbesserte mechanische Eigenschaften zu verleihen, insbesondere werden sie biaxial orientiert, wobei die Molekülketten des Polymeren in zwei Vorzugsrichtungen ausgerichtet werden. Um den biaxial orientierten Folien auch noch eine befriedigende Dimensionsstabilität zu verleihen, werden diese Folien üblicherweise nach dem Streckprozeß einem Thermofixierschritt unterworfen. Dabei werden die Folien kurzfristig auf eine Temperatur knapp unterhalb der Schmelztemperatur des verwendeten Polymeren erhitzt, was zur Folge hat, daß die Polymerketten in dem durch die vorherige Streckung bewirkten Orientierungszustand fixiert werden. Eine auf diese Weise thermofixierte Folie zeigt bei späterer Erwärmung kein unerwünschtes Schrumpfverhalten mehr.

Neben den mechanischen Eigenschaften ist ein weiteres Kriterium für den Einsatz und die Verwendung von Folien aus thermoplastischen Kunststoffen deren Oberflächenbeschaffenheit wie z.B. die Gleiteigenschaften, die Rauhigkeit, die elektrostatische Aufladung, aber auch Kratzfestigkeit und Abriebfestigkeit. Es sind zahlreiche Druckschriften bekannt, die sich mit Zusätzen oder Be schichtungen zur Verbesserung des Gleitvermögens und des Schlupfes befassen, sowie solche, die eine antistatische Ausrüstung von Folien beschreiben. Es werden auch Beschichtungen und Behandlungsmethoden zur Verbesserung von Kratz- und Abriebfestigkeit beschrieben (siehe z.B. DE-OS 34 15 835, DE-OS 31 01 232 und EP-A-0 074 750).

Nun hat es sich gezeigt, daß die Kratz- und Abriebfestigkeit von Folien aus thermoplastischen Kunststoffen, insbesondere von Folien aus thermoplastischen Polyestern, u.a. auch eine Funktion des Kristallisationsgrades der Folienoberfläche ist.

Ausgehend von dieser Erkenntnis liegt der vorliegenden Erfindung die Aufgabe zugrunde, eine Folie aus thermoplastischem Polyestermaterial zu schaffen, die gegenüber dem aufgezeigten Stand der Technik eine verbesserte Abriebfestigkeit aufweist, sowie ein Verfahren zur Herstellung einer solchen Folie anzugeben.

Gelöst wird diese Aufgabe durch eine Folie der eingangs genannten Gattung, deren kennzeichnenden Merkmale darin zu sehen sind, daß sie eine Dichte von mehr als $1,38 \text{ g/cm}^3$ aufweist und daß zwischen der Doppelbrechung ($\Delta n$), der reduzierten spezifischen Viskosität (RSV) und dem Temperpeak (Tp) der Folie folgende Beziehung besteht:

$$\text{RSV} - | \Delta n | - \text{Tp}/250 \geq 0$$

mit $| \Delta n | = | n_{MD} - n_{TD} |$.

Der Kristallisationsgrad einer biaxial orientierten Polyesterfolie hängt in erster Näherung von drei Parametern ab, nämlich

- von der Viskosität der eingesetzten Polymerrohstoffe,
- vom Orientierungszustand der Folie,
- von der Temperatur und der Zeit der thermischen Nachbehandlung.

Die Viskosität der Polymerrohstoffe wird als reduzierte spezifische Viskosität (RSV) angegeben, die Messung erfolgt nach DIN 53 728, Blatt 3. Für biaxial orientierte Polyesterfolien liegt der RSV-Wert im allgemeinen zwischen 0,65 und 0,85 dl/g, wobei besonders hohe RSV-Werte erreicht werden, wenn der Polyesterrohstoff vor der Verarbeitung zur Folie besonders gut getrocknet wird (Vakuumtrocknung). Dadurch wird ein Kettenabbau des Polyesters durch Hydrolyse während der Verarbeitung zur Folie verhindert. Außerdem muß darauf geachtet werden, daß kein wesentlicher Polymerkettenabbau durch eventuell auftretende Scherkräfte während der Extrusion stattfindet.

Der Orientierungszustand der Folie wird gemessen über die Orientierungsdoppelbrechung ($\Delta n$) der biaxial orientierten Folien:

$$\Delta n = n_{MD} - n_{TD},$$

wobei

$n_{MD}$      den Lichtbrechungsindex in Maschinenrichtung, also längs, und

$n_{TD}$      den Lichtbrechungsindex in transverser Richtung, also quer,

bedeuten.

Die Lichtbrechungsindices werden in bekannter Weise mit einem Abbé-Refraktometer bestimmt.

Die mechanischen Eigenschaften einer Folie werden, wie eingangs bereits dargelegt, durch den Orientierungszustand der Folie bestimmt. Sollen die mechanischen Eigenschaften in beiden senkrecht zueinander verlaufenden Streckrichtungen ungefähr ausgeglichen (isotrop, balanced) sein, so muß die Folie in beiden Richtungen um den gleichen Faktor (Grad) gestreckt werden. In diesem Fall werden für $n_{MD}$ und $n_{TD}$ nahezu gleiche Werte gemessen, die Differenz $\Delta n$ beträgt dann etwa Null.

Für manche Folienanwendungen werden Folien benötigt, die in einer Vorzugsrichtung ganz besonders hohe mechanische Eigenschaften aufweisen sollen (Anisotropie). Solche Folien werden dann in dieser einen Richtung in besonders hohem Maß gestreckt und zeigen dann auch in dieser einen Richtung einen deutlich höheren Lichtbrechungsindex im Vergleich zu der dazu senkrechten anderen Richtung. Die Differenz $\Delta n$ nimmt dann konkrete Werte an.

Da der Streckmechanismus bei biaxial orientierten Polyesterfolien, ob er nun stufenweise oder in mehreren Richtungen gleichzeitig simultan durchgeführt wird, im wesentlichen nur relativ geringen Variationsmöglichkeiten unterworfen ist - es müssen z.B., um gute Dickengleichmäßigkeiten der Folie zu erreichen, bestimmte Mindeststreckverhältnisse überschritten werden -, genügt zur Beschreibung des Orientierungszustandes im einfachsten Fall die Angabe der Differenz der Brechungsindices, die Orientierungsdoppelbrechung

$$\Delta n = n_{MD} - n_{TD}.$$

Je höher die Orientierungsdoppelbrechung ist umso höher ist die Anisotropie und ferner umso höher ist eine mechanische Eigenschaft in einer bestimmten Richtung, MD oder TD.

Ist $\Delta n$ im Bereich

$$-10 \cdot 10^{-3} \leq \Delta n \leq + 10 \cdot 10^{-3},$$

so spricht man gewöhnlich von "isotropen" oder "balanced" Folien. Sie stellen den Hauptanteil biaxial orientierter Polyethylenterephthalatfolien.

Ist

$$\Delta n < -10 \cdot 10^{-3},$$

so spricht man von "hoch quergestreckten" Folien (auch querfest),

ist

$$\Delta n > 10 \cdot 10^{-3}$$

von "hoch längsgestreckten Folien" (auch längsfest).

Bei in Längsrichtung sehr hoch gestreckten Folien kann der Wert $\Delta n$ über $50 \cdot 10^{-3}$ steigen.

Die Temperatur und die Zeit bei der thermischen Nachbehandlung einer Folie kann überprüft werden anhand des Temperpeaks (Tp) in der (DSC)-Kurve. Zur Ermittlung des Temperpeaks wird eine Folienprobe (ca. 2,8 mg) in einem Differentialkalorimeter aufgeheizt und der Wärmefluß ge gen die Temperatur aufgetragen. Der Temperpeak (Tp) ist ein dem eigentlichen Schmelzpunkt vorgelagerter Peak, dessen Zustandekommen durch das Aufbrechen des Kristallisationszustandes des die Folie bildenden Polymeren zu erklären ist. Er wird in $^\circ$C angegeben.

Es hat sich nun überraschend gezeigt, daß bei Folien mit besonders guter Abriebfestigkeit die in Anspruch 1 genannte Beziehung der im vorstehenden genannten Parameter eingehalten werden muß, insbesondere soll der Wert zwischen 0,01 und 0,5 liegen.

Außerdem beträgt die Dichte derartiger Folien, für die die dargestellte Beziehung gilt, infolge ihres Kristallisationsgrades mehr als 1,38 g/cm$^3$.

Die Folie wird aus einem thermoplastischen Polyester hergestellt. Unter Polyesterrohstoffen sind Polyester-Homo- und -Copolymere, Gemische verschiedener Polyester sowie Abmischungen und Blends von Polyestern mit anderen Polymeren zu verstehen.

Die Herstellung der Polyester kann sowohl nach dem Umesterungsverfahren mit den bekannten Katalysatoren wie z.B. Zn-, Ca-, Mn-, Li-, Ge-Salzen oder nach dem Direktveresterungsverfahren erfolgen. Beispiele für Polyester sind Polyethylenterephthalat, Polytetramethylenterephthalat, Poly-1,4-cyclohexylendimethylterephthalat, Polyethylen-2,6-Naphthalat.

Die Copolyester können als Bausteine Adipinsäure, Sebacinsäure, Phthalsäure, Isophthalsäure, Sulfoisophthalsäure u.a. enthalten. Die nach dem Umesterungsverfahren hergestellten Polyester können sogenannte interne Partikel, Katalysatorrückstandsteilchen enthalten. Beispiele für Polymere, die in den Polyester eingearbeitet werden können, sind Polyolefin-Homo- oder -Copolymere wie Polypropylen, Poly-4-methylpenten, Ethylen-Vinylacetat-Copolymere, die ihrerseits verseift sein können, Ionomere, Polyamide, Polycarbonate, fluorhaltige Polymere.

Weiterhin können die Folien anorganische oder organische Additive enthalten, die sich auf ihre Eigenschaften wie z.B. die Haft- und Gleitreibung und die Abriebfestigkeit sowie das Laufverhalten positiv auswirken. Beispiele für derartige Additive sind Pigmente wie CaCO$_3$, SiO$_2$, TiO$_2$, Kaolin, Fettsäureester, Polysiloxane, Nukleierungsmittel wie Alkali- oder Erdalkalisalze von Esterwachsen bzw. teilverseiften Produkten derselben, Benzoaten, Stearaten.

Die Teilchengröße der inerten Teilchen liegt vorzugsweise im Bereich von 0,01 bis 5,0 $\mu$m. Auch weitere Additive wie Schlupf- und Gleitmittel, Antistatika, Antioxidantien und andere mehr können vorzugsweise der Folie zugesetzt werden.

Die Polymeren und Additive können nach an sich bekannten Verfahren, die nicht näher beschrieben werden müssen, über ein Konzentrat eingearbeitet werden. Alternativ hierzu können sie während der Herstellung des Polyesters zudosiert werden.

Da die Kratz- und Abriebfestigkeit nur von den oberflächennahen Schichten bestimmt wird, kann mit Hilfe eines mehrschichtigen Aufbaues ein besonders guter Effekt erreicht werden, wobei z.B. in der Zentrumslage, die dann vorteilhafterweise mehr als 80% der Gesamtdichte betragen soll, ein hochkristallisierender Polyethylenterephthalatrohstoff eingesetzt wird, der die gute Dimensionsstabilität der Folie bestimmt. Dabei gelten die Betrachtungen für relative spezifische Viskosität, Orientierungsdoppelbrechung und Temperpeak nur für die Deckschicht(en). Aufgrund der dann besser beherrschbaren Dimensionsstabilität ist eine solche Mehrschichtfolie der Monofolie sogar vorzuziehen.

Folien der vorstehend beschriebenen Art werden normalerweise nach dem Schmelzextrusionsverfahren hergestellt. Bei diesem Verfahren wird das thermoplastische Kunststoffmaterial in Extrudern geschmolzen, durch eine Breitschlitzdüse auf eine Kühlwalze ausgepreßt, abgekühlt, wiedererhitzt, biaxial verstreckt, hitzefixiert, geschnitten und aufgewickelt. Zur Herstellung der erfindungsgemäßen Folien ist vorgesehen, daß bei einem Verfahren der vorstehend genannten Art der Herstellungsschritt der Hitzefixierung bei Temperaturen durchgeführt wird, die 200° C nicht überschreiten.

Im Falle der Herstellung von Mehrschichtfolien wird bevorzugt das Coextrusionsverfahren angewendet, wobei die die einzelnen Schichten der die Folie bildenden thermoplastischen Kunststoffschmelzen entweder unmittelbar an der Austrittsöffnung der Breitschlitzdüse vereinigt wer den oder nach der Adaptertechnologie bereits vor Eintritt in die Breitschlitzdüse in einer eigens zu diesem Zweck zwischengeschalteten Einheit miteinander in Kontakt gebracht werden.

Die erfindungsgemäßen Folien eignen sich für alle Anwendungsgebiete, bei denen hohe Kratz- und Abriebfestigkeit erforderlich sind. Insbesondere sind sie geeignet für reprografische Anwendungen, besonders bevorzugt aber als Trägermaterialien für Magnetbänder oder andere magnetische Aufzeichnungsmaterialien. Sie sind ferner vorteilhaft verwendbar, um durch Bedampfung oder Sputtern eine Metallisierung aufzunehmen.

In den nachfolgend beschriebenen Ausführungsbeispielen sollen die Vorteile der erfindungsgemäßen Folie noch deutlicher zum Ausdruck gebracht werden. Bei den hergestellten Folien wurde das Abriebverhalten an einem Meßgerät ermittelt, bei dem ein 12,5 mm breites Folienband mit einer konstanten Bahnspannung (1N) zunächst über eine Reinigungswalze aus speziellem Gummi zwecks Entfernung des aufliegenden Schmutzes, dann über einen feststehenden Umlenkstift aus einer Kassette gezogen, anschließend über zwei als Meßrollen dienende Gummirollen geführt und dann aufgerollt wurde. Die Beladung der Gummirollen mit abgeriebenem Material wurde nach einer Meßskala von 1 bis 5 von sehr gut bis mangelhaft beurteilt.

## Beispiel 1

Ein Polyethylenterephthalatrohstoff, der 3000 ppm Barium sulfat als Schlupfmittel enthielt, wurde aufgeschmolzen, in einer Breitschlitzdüse zu einer Folie geformt und auf einer hochglanzpolierten Abkühlwalze mit einer Oberflächentemperatur von 40° C zu einer amorphen Folie abgeschreckt. Die Vorfolie wurde anschließend bei 95° C längsgestreckt und bei 110° C quergestreckt, wobei das Flächenstreckverhältnis 13 betrug. Die 14,5 μm dicke Folie wurde anschließend bei 230° C Rahmentemperatur thermofixiert. Die an der Endfolie ermittelte reduzierte spezifische Viskosität, die Orientierungsdoppelbrechung, der TemperPeak und die Abriebfestigkeit sind aus der Tabelle 1 ersichtlich.

## Beispiel 2 bis 4

Eine wie in Beispiel 1 beschriebene biaxial orientierte 14,5 μm dicke Folie wurde im Rahmen einer Versuchsreihe bei Rahmentemperaturen von 210° C, 195° C und 190° C fixiert.
Die Kenndaten dieser Folien sind ebenfalls aus der Tabelle 1 ersichtlich.
Die Beziehung RSV-$|\Delta n|$ -$T_p/250 \geq 0$ wird in den Beispielen 3 und 4 erfüllt, die Abriebfestigkeit war dementsprechend gut.

## Beispiel 5

Ein Polyester, der 4000 ppm Kalziumkarbonat mit einer mittleren Teilchengröße von 1,0 μm enthielt

4

und eine relative spezifische Viskosität von 0,840 hatte, sowie ein Polyester mit einer relativen spezifischen Viskosität von 0,725 wurden in Vakuumtrocknern separat bei 160°C ge trocknet, getrennt voneinander aufgeschmolzen und zu einer Zweischichtfolie extrudiert, in Längs- und Querrichtung bei 95°C bzw. 110°C stufenweise biaxial gestreckt und bei einer Rahmentemperatur von 210°C fixiert. Die erhaltene Zweischichtfolie wies eine Gesamtdicke von 14,5 μm auf, wobei die Basisschicht von dem Polyester mit der niederen relativen Viskosität gebildet wurde und eine Dicke von 13 μm aufwies und wobei die Dicke der Deckschicht 1,5 μm betrug.

Die Kenndaten der einzelnen Schichten sind aus der Tabelle 1 ersichtlich. Eine gute Abriebfestigkeit hat demnach nur die Deckschicht.

## Tabelle 1

### Kenndaten der unter verschiedenen Bedingungen hergestellten Folien

| Bei-spiel | Fixiertem-peratur, °C | Temper-Peak, °C | $|\Delta n|$ | RSV dl/g | RSV-$\frac{|\Delta n|\text{-Tp}}{250}$ | Abrieb | |
|---|---|---|---|---|---|---|---|
| 1 | 220 | 204 | $6,6\cdot10^{-3}$ | 0,761 | $<0$ | 5 | |
| 2 | 210 | 191 | $4\ \cdot10^{-3}$ | 0,766 | $<0$ | 5 | |
| 3 | 195 | 182 | $1,5\cdot10^{-3}$ | 0,761 | $>0$ | 1-2 | |
| 4 | 190 | 186 | $1,8\cdot10^{-3}$ | 0,750 | $>0$ | 2 | |
| 5 | 210 | 191 | $7\ \cdot10^{-3}$ | 0,820 | $>0$ | 2 | Deckschicht |
| | | 189 | $1,3\cdot10^{-3}$ | 0,700 | $<0$ | 5 | Basisschicht |

## Ansprüche

1. Biaxial orientierte und thermofixierte Folie aus thermoplastischem Polyester mit verbesserter Abriebfestigkeit, dadurch gekennzeichnet, daß sie eine Dichte von mehr als 1,38 g/cm³ aufweist und daß

6

EP 0 193 844 B1

zwischen der Doppelbrechung ($\Delta$n), der reduzierten spezifischen Viskosität (RSV) und dem Temperpeak (Tp) der Folie folgende Beziehung besteht:

$$RSV - |\Delta n| - Tp/250 \geqq 0$$
$$mit\ |\Delta n| = |n_{MD} - n_{TD}|.$$

2. Folie nach Anspruch 1, dadurch gekennzeichnet, daß der durch die Formel errechnete Wert bevorzugt im Bereich zwischen 0,01 und 0,5 liegt.

3. Folie nach Anspruch 1 oder 2, dadurch gekennzeichnet, daß sie zwei- oder mehrschichtigen Aufbau besitzt und daß der durch die Formel errechnete Wert wenigstens für eine der Außenschichten $\geqq 0$ ist.

4. Folie nach Anspruch 3, dadurch gekennzeichnet, daß wenigstens eine Schicht anorganische und/oder organische inerte Teilchen mit einer Teilchengröße im Bereich von 0,01 bis 5,0 $\mu$m enthält.

5. Folie nach einem der Ansprüche 1 bis 4, dadurch gekennzeichnet, daß sie weitere Additive wie Schlupf- und Gleitmittel, Antistatika, Antioxidantien und andere mehr enthält.

6. Verfahren zur Herstellung einer Folie nach einem der Ansprüche 1 bis 5, bei dem das die Folie bildende thermoplastische Kunststoffmaterial in einem Extruder aufgeschmolzen, durch eine Breitschlitzdüse auf eine Kühlwalze ausgepreßt, abgekühlt, wiedererhitzt, biaxial verstreckt, hitzefixiert, geschnitten und aufgewickelt wird, dadurch gekennzeichnet, daß die Hitzefixierung bei Temperaturen durchgeführt wird, die 200 °C nicht überschreiten.

7. Verwendung einer Folie nach einem der Ansprüche 1 bis 5 zu reprografischen Anwendungen, als Trägerfolie für magnetische Aufzeichnungsmaterialien oder zur Metallisirung.


**Claims**

1. Biaxially oriented and heat-set film made of thermoplastic polyester and possessing improved abrasion resistance, characterized in that said film has a density of more than 1.38 g/cm$^3$ and that there exists the following relationship between the birefringence ($\Delta$n), the reduced specific viscosity (RSV) and the temper peak (Tp) of the film:

$$RSV - |\Delta n| - Tp/250 \geqq 0$$

with $|\Delta n|$ being equal to $|n_{machine\ direction} - n_{transverse\ direction}|$.

2. The film of claim 1, characterized in that the value calculated from said formula preferably is in the range of 0.01 to 0.5.

3. The film of claim 1 or 2, characterized in that it is comprised of two or more layers and that at least for one of the outer layers the value calculated from said formula is $\geqq 0$.

4. The film of claim 3, characterized in that at least one layer includes inorganic and/or organic inert particles having a size of 0.01 to 5.0 $\mu$m.

5. The film of any of claims 1 to 4, characterized in that it contains further additives, such as slip and anti-blocking agents, antistatic agents, antioxidants and the like.

6. Process for manufacturing a film as claimed in any of claims 1 to 5, where the thermoplastic material is melted in an extruder, extruded through a slot die onto a chill roll, cooled down, reheated, biaxially oriented, slit and wound up, characterized in that heat-setting is performed at temperatures which do not exceed 200 °C.

7. Use of a film according to any of claims 1 to 5 for reprographic applications, as a support film for magnetic recording media or for metallizing.


**Revendications**

7

1. Feuille orientée biaxialement et thermofixée en polyester thermoplastique, à résistance à l'abrasion améliorée, caractérisée en ce qu'elle présente une masse spécifique de plus de 1,38 g/cm$^3$ et que la relation suivante existe entre la biréfringence ($\Delta$n), la viscosité spécifique réduite (RSV) et le pic de recuit (Tp) de la feuille:

RSV - $|\Delta n|$ - Tp/250 $\geq$ 0

avec $|\Delta n| = |n_{MD} - n_{TD}|$ .

2. Feuille selon la revendication 1, caractérisée en ce que la valeur calculée par la formule est de préférence comprise entre 0,01 et 0,5.

3. Feuille selon la revendication 1 ou 2, caractérisée en ce qu'elle possède une structure à deux ou plusieurs couches et que la valeur calculée par la formule est $\geq$ 0 pour au moins une des couches externes.

4. Feuille selon la revendication 3, caractérisée en ce qu'au moins une couche renferme des particules inertes minérales et/ou organiques de taille comprise entre 0,01 et 5,0 $\mu$m.

5. Feuille selon l'une des revendications 1 à 4, caractérisée en ce qu'elle renferme d'autres additifs, tels que des agents de glissement, des agents anti-blocking, des antioxydants, des agents antistatiques, etc.

6. Prodédé de fabrication d'une feuille selon l'une des revendications 1 à 5, dans lequel on fait fondre le matériau synthétique thermoplastique formant la feuille dans une extrudeuse, on l'extrude par une filière à fente large sur un cylindre refroidisseur, on le refroidit, on le réchauffe, on l'étire biaxialement, on le fixe par la chaleur, on le découpe et on l'enroule, caractérisé en ce que le thermofixage est réalisé à des températures ne dépassant pas 200$^\circ$C.

7. Emploi d'une feuille selon l'une des revendications 1 à 5, pour des applications reprographiques, comme feuille support pour matériels d'enregistrement magnétiques ou pour la métallisation.